# EUROPEAN PATENT APPLICATION

(11) **EP 4 261 408 A1**
(43) Date of publication of application: **18.10.2023**
(21) Application number: 22167785.9
(22) Date of filing: 12.04.2022
(51) Int. Cl.: F03D 17/00, F03D 80/50, G06T 7/00

(54) **METHOD FOR TECHNICALLY SUPPORTING A MANUAL INSPECTION PROCESS OF A WIND TURBINE COMPONENT**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention relates to a method for technically supporting a manual inspection process of a wind turbine component (1), wherein a user executes inspection steps, which are output to the user in the form of handling instructions (HI) during the manual inspection process. The handling instructions (HI) originate from a management server (40) for managing the manual inspection process. The inspection steps specify the location and type of a manufacturing issue on the wind turbine component (1). Digital thermographic images (IM20, IM30) of different adjacent parts of the wind turbine component (1) are obtained. At least one defect information (ISI) is determined by processing the images (IM20, IM30) by a CNN (MO), where the images (IM20, IM30) are fed as a digital input to the CNN (MO) and the CNN (MO) provides the defect information (ISI) as a digital output. The at least one defect information (ISI) comprising a type of the issue (DT) and an information on its location (LOC) at the wind turbine component (1) is transmitted to the management server (40). The at least one defect information (ISI) is outputted to the user in an at least partially visual manner by means of data glasses (50) by overlaying a bounding box (BB) onto the wind turbine component (1) to be inspected at the location (LOC) the issue has been determined.

## Description

The present invention relates to a method and a system for technically supporting a manual inspection process of a wind turbine component, in particular a rotor blade.

During a manual inspection process of a wind turbine component, such as a rotor blade, areas of defects shall be detected. Such defects may be, for example, air inclusions in the structure of the rotor blade which can be found under an outer-most layer. This outer-most layer is constituted by soft shell layer and is adhered to the rotor blade by an adhesive. The outer-most layer which is attached around a leading edge of the rotor blade aims to protect the leading edge of the rotor blade during operation of the wind turbine and is attached to it in a manual process. The air inclusions can occur between the soft shell and the adhesive as well as between the adhesive and the rotor blade. Hence, these defects are hidden in the blade structure.

Up to now, the inspection process is executed by a technician by means of visual inspection. In future, the defects shall be detected by analyzing images which have been taken from the surface of the wind turbine component with a camera. After having identified the defects in the images, a worker needs to "open" the blade structure and rebuild it to remove the voids. In this process, it is necessary to know exactly at which location the void can be found as well as the type of void.

It is an object of the present invention to provide a method for technically supporting a manual inspection process of a wind turbine component which provides an improved assistance for defect identification and repair to a user.

This object is solved by a method according to the features of claim 1 and a corresponding system with the features according to present claim 8. Preferred embodiments are set out in the dependent claims.

The present invention provides a method for technically supporting a manual inspection process of a wind turbine component. Although the wind turbine component to be inspected could be any component of a wind turbine, the method is preferably intended for manual inspection of a wind rotor blade. In this method, a user executes inspection steps, which are output to the user in the form of handling instructions during the manual inspection process. The handling instructions originate from a management server for managing the manual inspection process and are stored therein in the form of digital data. The one or more inspection steps respectively specify the location of one or more manufacturing issues of a wind turbine component.

In this context, the management server represents a computer, by means of which the manual inspection process can be managed. The manual inspection process aims to assist a user in finding the location of one or more manufacturing issues as well as to give an information about which type of issue to find at which location, and to which extend.

While performing the method according to the invention, a plurality of digital images of different adjacent parts of a wind turbine component is obtained. The plurality of images are thermographic images taken by at least one camera which is moved along an axis of the wind turbine component to be inspected. The potential defects are not visible from the outer surface of the blade. Rather, the defects to be potentially detected, are "hidden" in the structure of the blade, so that a non-destructive testing method is required. Thermography is especially helpful in this regard, because in that process no structural change to the blade occurs, and still the method makes the defects visible. In the following, the term "image" refers to a digital image. The term "obtaining an image" means that the image is received by a processor implementing the method of the invention. The term "camera" refers to an imaging device working in at least a part of the spectrum of infrared light.

In a next step, at least one defect information is determined by processing the plurality of images by a trained data driven model, where the plurality of images is fed as a digital input to the trained data driven model and the trained data driven model provides the at least one defect information as a digital output. The at least one defect information comprises a type of the issue and an information on its location at the wind turbine component. It may comprise further information used for generating the handling instructions.

The at least one defect information is determined based on a plurality images captured by one or more cameras. The trained data driven model which is used to determine the at least one defect information is trained by training data comprising a plurality of images taken by one or more cameras from a wind turbine component together with the information about the type of the issue captured in the respective image of the training data. Any known data driven model being learnt by machine learning may be used in the method according to the invention.

In a particularly preferred embodiment, the trained data driven model is a neural network, preferably a Convolutional Neural Network for Object Detection which is particularly suitable for processing image data. For example, the known YOLO v2 model (You Only Look Once) pre-trained on a COCO data set (a common object detection database) may be used as backbone for training the data driven model. This specific type of CNN can be fine-tuned by retraining on the training data with the specific defect type(s). Nevertheless, other trained data driven models may also be implemented in the method of the invention, e.g., models based on decision trees or support vector machines, or other Deep Learning techniques like Transformers.

According to a further step, the at least one defect information is transmitted to the management server to be stored therein as digital data. The at least one defect information is then outputted as the handling instruction to the user in an at least partially visual manner by means of data glasses by overlaying a bounding box onto the wind turbine component to be inspected at the location the issue has been determined.

The output glasses should be interpreted as a synonym for a head-mounted visual display device, such as an augmented reality device, wherein the data glasses may optionally comprise, if applicable, acoustic and/or tactile output units. If applicable, data glasses may also be implemented in the form of one or two contact lenses that are worn by the user and make it possible to visually display information to the eye or the eyes of the user. It is preferred that the data glasses output the handling instructions which are transmitted from the management server to the data glasses in the form of digital data. The handling instructions to be currently executed guide the user by overlaying a bounding box onto the location of the issue at the wind turbine component and the type of issue.

The method according to the invention has the advantage that handling instructions do not have to be output to the user in the form of a paper printout that is based on the digital data in the management server. Instead, one or more handling instructions containing the information of which type of issue to find where and to which extent is outputted to the user in an at least partially visual manner by means of the data glasses by overlaying a bounding box onto the wind turbine component to be inspected at the location the issue has been determined. This improves the workflow and helps automated defect detection by adding deep learning and augmented reality to have a visual representation of the defect location when a user inspects the wind turbine component. Furthermore, the user is guided in defect detection and thus, process errors can be reduced.

The data glasses may have a wireless data interface to be able to receive the at least one defect information from the management server. The wireless data interface may be implemented, in particular, in the form of a Bluetooth interface and/or a WiFi and/or WLAN interface or any other suitable communication protocol.

In a particularly preferred embodiment, the information of the location of the at least one defect information comprises a radial position along the axis of the wind turbine component. The axis of the wind turbine component may be a radial axis in case the wind turbine component is a rotor blade. It may additionally or alternatively comprise an information which of the plurality of cameras has taken the at least one image. Thereby, an information about a component side can be determined. In case of a rotor blade, it can be determined whether the images captured have been taken from its suction side or its pressure side, for example. Further alternatively or additionally, the information on a specific location in the at least one image is part of the at least one defect information. The information on a specific location in each of the images enables a mapping of the location of the issue in the image to the actual location of the issue on the wind turbine component. The information on a specific location may be a visual information which is part of a respective image or a digital information which can been added when capturing the image by, for example, a positioning system which is able to determine the actual position of the camera relative to the area of the wind turbine component.

In a further particularly preferred embodiment, each thermographic image is taken from the same distance. This embodiment ensures that respective colors in different images correspond to respective temperatures making it easy for the trained data driven model to provide the at least one defect information in the plurality of images.

Preferably, the wind turbine component is heated in the area to be captured before the thermographic image is taken. As air inclusions have a different temperature compared to the surrounding material of the wind turbine component, they can be "highlighted" in the images compared to the surrounding material. This enables an easy and reliable detection of the voids by means of the trained data driven model.

According to a further preferred embodiment, each thermographic image is assigned with a visual marking and/or a digital information enabling a mapping of the image content showing the wind turbine component at a specific location to a given coordinate system of the real wind turbine component. The visual marking may be, for example, a ruler or a grid which may be part of the outer-most shell to be inspected. The ruler or grid may, alternatively, be added to the image at the time of capturing. The digital information may additionally comprise an image name, 3D-coordinates of the camera when the image is taken to enable a mapping of the image and the actual area of the captured wind turbine component.

According to a further preferred embodiment, the type of issue comprises at least one of an air inclusion, a QR code, a wrinkle or an unspecified defect. Besides the mentioned types of issues, further types of issues may be identified. They are then considered in the training data to enable the trained data driven model to provide the at least one defect information as a digital output which comprises the type of the issue and the information on its location at the wind turbine component.

Besides the method above, the invention refers to a system for technically supporting a manual inspection process of a wind turbine component where the system is configured to perform the method according to the invention where one or more preferred embodiments of the method according to the invention.

Moreover, the invention refers to a computer program product with a program code which is stored on a non-transitory machine-readable carrier, for carrying out the method according to the invention or one or more preferred embodiments thereof when the program code is executed on a computer.

An embodiment of the invention will now be described in detail with respect to the accompanying drawings.
- Fig. 1: shows a schematic illustration of a system for technically supporting a manual inspection process of a wind turbine component according to an embodiment of the invention;
- Fig. 2: shows a schematic workflow of processing a respective image of a wind turbine component to be inspected by means of a trained data driven model to determine type and location of a void;
- Fig. 3: shows a plurality of images in which respective defect information is highlighted which has been determined by a trained data driven model; and
- Fig. 4: shows outputting an defect information to the user wearing data glasses by overlaying a bounding box onto the wind turbine which is inspected by the user at a location where an issue has been determined and highlighted.

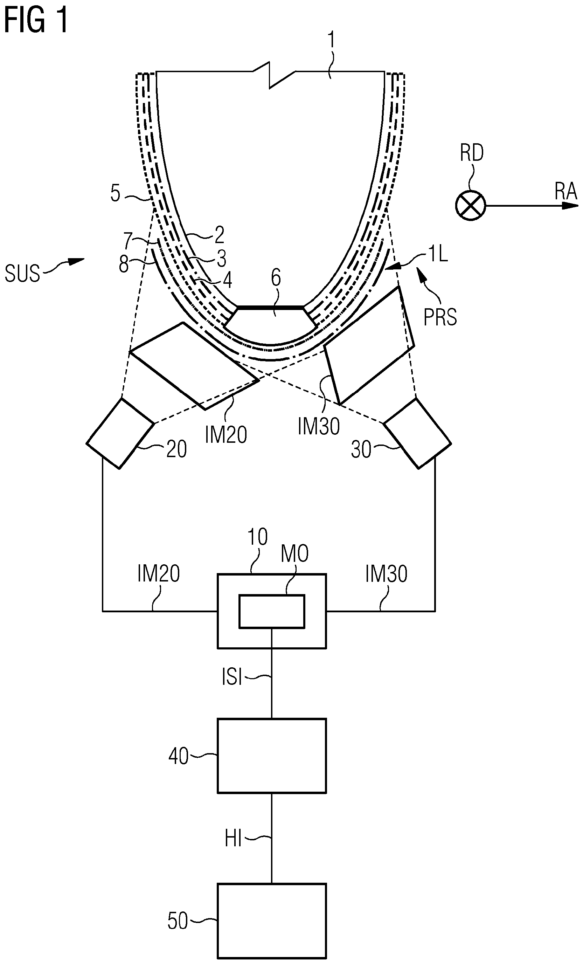

Fig. 1 shows a partial cross section of a rotor blade 1. The rotor blade 1 constitutes a wind turbine component according to the invention. Nevertheless, the method described below may also be applied to other parts of a wind turbine than rotor blades. The cross section of the rotor blade is shown in a view along a radial axis RD. When mounted to a not shown rotor of the wind turbine, the rotation axis of the rotor blade 1 is indicated by the error RA. A leading edge of the rotor blade 1 is indicated with 1L.

The leading edge 1L of the rotor blade 1 has a soft shell 8 mounted thereon. The soft shell 8 provides protection to the rotor blade 1 when rotating around its rotation axis RA with high speed. The soft-shell layer 8 is in the outer-most layer of a plurality of layers which are applied to a body 2 made of glass-fiber reinforced plastic (GFRP) or carbon-fiber. The layer structure from the body 2 towards the soft-shell layer 8 may be as follows: fine filler 3, primer (and spot filler) 4, topcoat 5, repair filler 6, adhesive 7, and the soft shell 8 as outer-most layer. It is to be understood that layers 3 to 6 are only optional.

Between the soft-shell layer 8 and the adhesive layer 7, or between the adhesive layer 7 and the repair filler 6 / topcoat 5, air inclusions may be found. The air inclusions are not shown in Fig. 1. During quality control, air inclusions are defects that need to be opened and rebuild to remove them. Hence, it is necessary for a technician to exactly know at which location of the rotor blade (in radial direction and chordwise, and on which side of the blade) which type of issue to which extend can be found.

In order to technically support the manual inspection process of the rotor blade 1 made by a human being, a camera system comprising two thermographic cameras 20, 30 is used. In the present embodiment, the camera system comprises two cameras 20, 30. However, the number of cameras may be chosen differently. The camera 20 is assigned a suction side SUS of the rotor blade 1. The camera 30 is assigned a pressure side PRS of the rotor blade 1. As can be seen from the schematic drawing of Fig. 1, each of the cameras 20, 30 captures an assigned area such that the whole soft shell 8 is captured.

The camera 20 obtains a plurality of digital images IM20 of different adjacent parts on the suction side SUS of the rotor blade 1. The camera 30 obtains a plurality of images IM30 of different adjacent parts on the pressure side PRS of the rotor blade 1. This ensures that the hole area of the soft shell 8 is captured by one of the cameras 20, 30.

The cameras 20, 30 are preferably mounted on a (not shown) cart which is guided along the radial axis RD. The guidance of the cameras 20, 30 along the radial axis RD is such that each image taken from the cameras 20, 30 is made from the same distance.

The cameras 20, 30 are adapted to capture thermographic images, where the area to be captured is preheated by not shown heater(s). Hence, the cameras 20, 30 are working in the infrared light spectrum to obtain thermographic images of the heated areas.

The respective images IM20, IM30 of the cameras 20, 30 are transferred by a suitable communication link to a processor 10 of the inspection system. The processor 10 has a trained data driven model MO implemented that receives the digital images IM20, IM30 as digital input and provides at least one defect information ISI as a digital output. The defect information ISI comprises a type of the issue DT and the information on its location LOC at the rotor blade 1.

The type of issue DT comprises, for example, an air inclusion, a QR code, a wrinkle (due to the fact that the soft shell 8 has not been adjusted properly to the body 2 of the rotor blade 1) and an unspecified defect in case that no specific type of defect can be determined.

The information on its location LOC at the rotor blade 1 comprises a radial position along the radial axis RD (i.e., in the radial direction) of the rotor blade 1. As the camera system comprises more than one camera, it furthermore comprises the information on which side (suction side SUS or pressure side PRS) the issue (defect) has been determined. In addition, it may comprise an information on a specific location LOC in the at least one image.

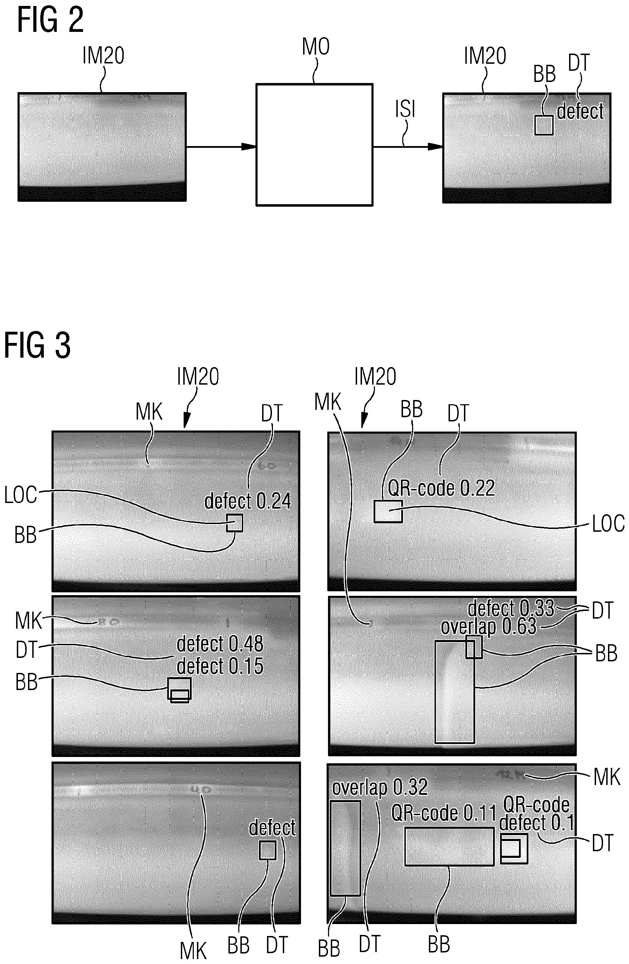

To determine the information on the location, each thermographic image IM20, IM30 is assigned with a visual marking MK (see Fig. 3) and/or a digital information. The visual marking MK may be a ruler or a grid which is already on the soft shell or included in the digital image when capturing it. The digital information may comprise an image name or 3D-coordinates of the camera when the image is taken in relation to the rotor blade 1. The visual marking and/or the digital information enable a mapping of the image content showing the issue at a specific location LOC of the rotor blade 1 (in an image coordinate system) to a given coordinate system of the wind turbine component 1.

The trained data driven model MO is based on a convolutional neural network having been trained beforehand based on training data. The trained data driven model may be based on the known YOLO v2 model (You Only Look Once) which is pre-trained on a COCO data set, i.e., a common object detection dataset. This model may be fine-tuned by transfer-learning based on the training data. The training data comprise a plurality of images of the rotor blade 1 taken by one of the cameras together with the information about a type of issue.

Convolutional Neural Networks are well-known from the prior art and are particularly suitable for processing digital images. A Convolutional Neural Network comprises convolutional layers followed by pooling layers as well as fully connected layers in order to determine at least one property (a type of issue) of the respective image whereby the property according to the invention is the defect information ISI comprising a location of an issue and its type.

The defect information ISI comprising the type of issue DT and the information on its location LOC at the rotor blade 1 is transmitted to the management server 40 and stored therein. The defect information ISI may be used to generate handling instructions HI or correspond to them.

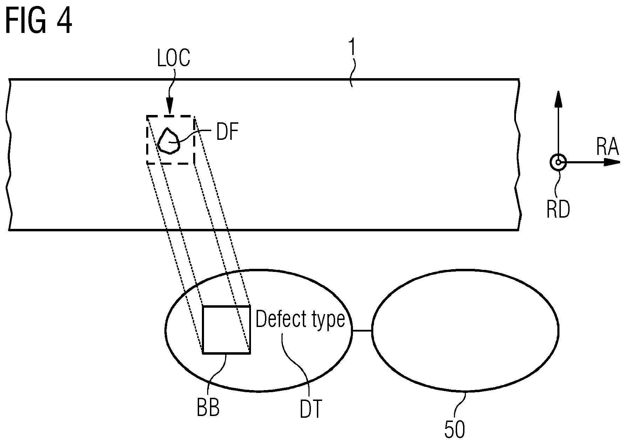

The at least handling instruction HI (or defect information ISI) is output to the user in a visual manner by means of data glasses 50 such that a bounding box BB is overlayed on the rotor blade 1 to be inspected at the location LOC the issue has been determined. Alternatively, the specific outer shape of the defect could be presented, which would require a different model training for e.g. semantic / instance segmentation. This is illustrated in Fig. 4 where a void of the rotor blade 1 is indicated by DF. The void (defect) DF is at a location LOC which is defined in radial direction (along radial axis RD) and chordwise. A user (not shown) is looking through the data glasses 50. In the left glass of data glasses 50 the bounding box BB is overlayed on the location LOC of the void DF together with the information of the defect type DT ("defect type").

The information on a specific location in the image may comprise further information, such as top-left point of defect width and height. Such an information can be converted from pixels in the image to lengths units like meters to make the mapping on the given coordinate system.

Fig. 2 shows a schematic diagram of processing a single image IM20. In the upper part, in different grey colors, a portion of the rotor blade 1 is shown. In the lower part, in black color, surrounding air is shown. The image 20 is fed as digital input to the trained data driven model MO which provides the defect information ISI as digital output. This enables to overlay a bounding box BB onto the wind turbine component or the image to be inspected at the location LOC the issue has been determined when the above-mentioned data glasses 50 are worn by a user.

Fig. 3 shows a plurality of exemplary images IM20 in which different defect information are contained. The defect information comprises the type of defect DT which is overlayed in a readable manner, such as "defect", "QR code", "overlap". The location of a defect LOC is surrounded by a bounding box BB.

In addition, a visual marking MK is included in the images showing a ruler and a scale. The scale of the ruler enables a mapping to the actual position of a defect of the component to be inspected by a conversion of the pixels of the image to length units like meters. In addition, it may be advantageous to have an information on which side of the component the image has been taken. This can be obtained by the image name. Hence, an image IM20 results from camera 20 that is assigned to the suction side SUS of the rotor blade 1 and an image IM30 taken by camera 30 which is assigned to the pressure side PRS of the rotor blade 1, for example. The information about the location of the image capturing can further include an information of a 3D-coordinate system which is predefined according to the component to be inspected.

The invention as described in the foregoing has several advantages. An easy and straight-forward method to detect the location of defects of wind turbine components is provided. A user is guided to find the defects and given the information about the type of the defect by using glasses which overlay additional information onto the wind turbine component to be inspected.

## Claims

1. A method for technically supporting a manual inspection process of a wind turbine component (1), in particular a rotor blade, wherein a user executes inspection steps, which are output to the user in the form of handling instructions (HI) during the manual inspection process, wherein said handling instructions (HI) originate from a management server (40) for managing the manual inspection process and are stored therein in the form of digital data, wherein one or more inspection steps respectively specify the location of one of more manufacturing issues on the wind turbine component (1), wherein the following steps are performed:
i) obtaining a plurality of digital images (IM20, IM30) of different adjacent parts of the wind turbine component (1), the plurality of images (IM20, IM30) being thermographic images taken by at least one camera (20, 30) which is moved along an axis (RD) of the wind turbine component (1) to be inspected;
ii) determining at least one defect information (ISI) by processing the plurality of images (IM20, IM30) by a trained data driven model (MO), where the plurality of images (IM20, IM30) is fed as a digital input to the trained data driven model (MO) and the trained data driven model (MO) provides the at least one defect information (ISI) as a digital output, the at least one defect information (ISI) comprising a type of the issue (DT) and an information on its location (LOC) at the wind turbine component (1);
iii) transmitting the at least one defect information (ISI) to the management server (40) to be stored therein as digital data; and
iv) outputting the at least one defect information (ISI) as the handling instruction to the user in an at least partially visual manner by means of data glasses (50) by overlaying a bounding box (BB) onto the wind turbine component (1) to be inspected at the location (LOC) the issue has been determined.

2. The method according to claim 1, wherein the information on the location (LOC) of the at least one defect information (ISI) comprises one or more of
- a radial position along the axis (RD) of the wind turbine component (1);
- an information which of a plurality of cameras (20, 30) has taken the at least one image (IM20, IM30), whereby an information about a component side can be determined;
- an information on a specific location (LOC) in the at least one image.

3. The method according to claim 1 or 2, wherein the trained data driven model (MO) is a neural network, preferably a Convolutional Neural Network.

4. The method according to one of the preceding claims, wherein each thermographic image (IM20, IM30) is taken from the same distance.

5. The method according to one of the preceding claims, wherein the wind turbine component (1) is heated in the area to be captured before the thermographic image (IM20, IM30) is taken.

6. The method according to one of the preceding claims, wherein each thermographic image (IM20, IM30) is assigned with a visual marking (MK) and/or a digital information enabling a mapping of the image content showing the wind turbine component (1) at a specific location (LOC) to a given coordinate system of the real wind turbine component (1).

7. The method according to one of the preceding claims, wherein the type of the issue (DT) comprises at least one of an air inclusion, a QR-code, a wrinkle or an unspecified defect.

8. A system for technically supporting a manual inspection process of a wind turbine component (1), in particular a rotor blade, wherein a user executes inspection steps, which are output to the user in the form of handling instructions (HI) during the manual inspection process, wherein one or more inspection steps respectively specify the location (LOC) of one of more manufacturing issues on the wind turbine component (1), wherein the system comprises:
- data glasses (50);
- a management server (40) for managing the manual inspection process, wherein the handling instructions (HI) originate from the management server (40) and are stored therein in the form of digital data;
wherein the system is configured to perform the following steps:
i) obtaining a plurality of digital images (IM20, IM30) of different adjacent parts of the wind turbine component (1), the plurality of images (IM20, IM30) being thermographic images taken by at least one camera (20, 30) which is moved along an axis (RD) of the wind turbine component (1) to be inspected;
ii) determining at least one defect information (ISI) by processing the plurality of images (IM20, IM30) by a trained data driven model (MO), where the plurality of images (IM20, IM30) is fed as a digital input to the trained data driven model (MO) and the trained data driven model (MO) provides the at least one defect information (ISI) as a digital output, the at least one defect information (ISI) comprising a type of the issue and an information on its location (LOC) at the wind turbine component (1);
iii) transmitting the at least one defect information (ISI) to the management server (40) to be stored therein as digital data; and
iv) outputting the at least one defect information (ISI) as the handling instruction to the user in an at least partially visual manner by means of data glasses by overlaying a bounding box onto the wind turbine component (1) to be inspected at the location (LOC) the issue has been determined.

9. The apparatus according to claim 8, wherein the apparatus (4) is configured to perform a method according to one of claims 2 to 7.

10. A computer program product with program code, which is stored on a non-transitory machine-readable carrier, for carrying out a method according to one of claims 1 to 7 when the program code is executed on a computer.
